# EUROPÄISCHE PATENTSCHRIFT

(11) **EP 2 146 111 B1**
(45) Veröffentlichungstag und Bekanntmachung des Hinweises auf die Patenterteilung: **06.04.2016**
(21) Anmeldenummer: 08012916.6
(22) Anmeldetag: 17.07.2008
(51) Int. Cl.: F16F 15/121, F16F 15/16

(54) **Drehelastische Kupplungseinrichtung**
Torsionally flexible clutch device
Dispositif d'embrayage élastique rotatif

(43) Veröffentlichungstag der Anmeldung: 20.01.2010
(73) Patentinhaber: TrelleborgVibracoustic GmbH, 64293 Darmstadt (DE)
(72) Erfinder: Eckel, Hans-Gerd, 69514 Laudenbach (DE); Pachta, Jiri, 69514 Laudenbach (DE)
(74) Vertreter: Flügel Preissner Schober Seidel

(56) Entgegenhaltungen:
- EP-A- 1 279 807
- EP-A- 1 760 355
- DE-B3-102004 043 136
- DE-C1- 19 636 628
- JP-A- 2002 317 647

## Beschreibung

Die Erfindung betrifft eine drehelastische Kupplungseinrichtung mit mindestens zwei miteinander verbundene Biegedrehfedern, wobei mindestens eine schraubenförmigen Biegedrehfeder konzentrisch um eine Drehachse angeordnet ist, wobei eine Antriebswelle und eine Abtriebswelle jeweils mit der Biegedrehfeder in Wirkverbindung bringbar und entgegen einem rückstellenden Drehmoment der Biegedrehfeder relativ zueinander um die Drehachse verdrehbar sind und mit einer Dämpfungseinrichtung.

Derartige drehelastische Kupplungseinrichtungen sind aus der Praxis bekannt und werden beispielsweise bei Fährzeugen mit einem Verbrennungsmotor dazu verwendet, um die ungleichförmigen Drehbewegungen einer Kurbelwelle des Verbrennungsmotors und den dadurch verursachten Vibrationen und Geräuschen entgegenzuwirken. Die unerwünschten Vibrationen, insbesondere die hohen Amplituden der Drehschwingungen und die dadurch bewirkte höhere mechanische Belastung der angeschlossenen Bauteile sowie die oftmals als störend empfundene Geräuschentwicklung nehmen mit höherer Leistung und insbesondere mit zunehmendem Drehmoment des Verbrennungsmotors deutlich zu.

Zu beobachten ist, dass in der Entwicklung befindliche Motoren immer höhere mittlere Drehmomente bereitstellen und dass künftig mit deutlich verstärkter dynamische Anregung zu rechnen ist. Die derzeit im Antriebstrang eingesetzten Drehfedern stoßen im vorgegebenen Bauraum bei noch weiter steigenden mittleren Drehmomenten und steigender dynamischer Anregung an Grenzen, d.h. sie können den Erfordernissen entsprechend nicht noch drehweicher ausgebildet werden.

Es besteht also der Bedarf, Drehfedern hoher Leistungsdichte zu entwickeln. Unter hoher Leistungsdichte soll hier das auf den Bauraum bezogen übertragbare hohe Drehmoment bei vorgegebener Drehfederrate oder bei vorgegebenem Drehmoment die niedrige Drehfederrate zu verstehen sein. Bei gegebenen Drehträgheiten der Antriebstrangkomponenten würde eine kleinere Drehfederrate eine verbesserte Isolation bedeuten, d.h. die Drehungleichförmigkeit des Verbrennungsmotors hätte weniger Einfluss auf den Triebstrang. Zudem würde die drehweichere Anbindung des Triebstrangs an den Verbrennungsmotor kleinere Betriebsdrehzahlen ermöglichen, die wiederum ein verbrauchsgünstigeres Fahren ermöglichen könnten.

Einfache drehelastische Kupplungseinrichtungen, wie sie aus dem Stand der Technik bekannt sind oder beispielsweise aus einem geeigneten Elastomer hergestellte Torsions- oder Drehfedern, weisen oftmals keine ausreichend hohe Leistungsdichte auf. Dabei wird von einer hohen Leistungsdichte einer Drehfeder ausgegangen, wenn bauraumbezogen bei einer vorgegebenen Federrate ein hohes Drehmoment übertragen werden kann oder wenn bei einem vorgegebenen hohen Drehmoment eine niedrige Federrate erreicht wird.

Es sind beispielsweise aus EP 1 760 355 A1 oder DE 10 2004 043 136 B3 weiterhin drehelastische Kupplungseinrichtungen mit einer schraubenförmigen Biegedrehfeder bekannt, bei denen die schraubenförmige Biegedrehfeder ein gewendeltes Metallband oder einen gewendelten Metalldraht aufweist. Das Metallband oder der Metalldraht ist an den entgegengesetzten Enden jeweils drehfest mit einer Antriebswelle und mit einer Abtriebswelle verbunden. Werden die Antriebswelle und die Abtriebswelle relativ zueinander um eine gemeinsame Drehachse verdreht, so wird das gewendelte Metallband kontrahiert oder ausgedehnt.

Aus DE 196 36 628 ist ein Freilauf bekannt, der ebenfalls eine schraubenförmige Federeinrichtung aufweist, deren Windungen je nach Drehrichtung verkippt werden, ohne dass eine nennenswerte Kontraktion oder Ausdehnung der schraubenförmigen Federeinrichtung erfolgt.

Drehelastische Kupplungseinrichtungen der eingangs genannten Gattung sind beispielsweise aus EP 1 279 807 A1 bekannt und weisen zusätzlich zu einer schraubenförmigen Biegedrehfeder eine weitere Dämpfungseinrichtung auf, die parallel zu der schraubenförmigen Biegedrehfeder angeordnet ist. In einigen Fällen handelt es sich bei den bekannten Dämpfungseinrichtungen um Fluid verdrängende oder Fluid scherende Dämpfungseinrichtungen. Bei z.B. mit der Antriebswelle bzw. mit der Abtriebswelle starr verbundenen Verdrängungskörpern, die in ein Dämpfungsfluid eintauchen bzw. hineinragen, wird bei einer Verdrehung der Antriebswelle relativ zu der Abtriebswelle auf Grund der Relativbewegung der Verdrängungskörper zueinander eine Verdrängung bzw. Umlagerung des Dämpfungsfluids erzwungen, wodurch eine Dämpfung der Relativbewegung eintritt.

Es hat sich allerdings gezeigt, dass mit immer leistungsstärkeren Motoren verstärkt auftretende Schwingungen in dem Antriebsstrang auftreten und die dadurch bewirkte mechanische Belastung und Geräuschentwicklung immer leistungsfähigere drehelastische Kupplungseinrichtungen erfordert. In den meisten Fällen nimmt der für die drehelastische Kupplungseinrichtung zur Verfügung stehende Raum jedoch nicht in dem Maße zu, wie es für die Wirkungshöhe, bzw. Leistungsdichte der drehelastischen Kupplungseinrichtung gemäß der eingangs genannten Gattung erforderlich wäre.

Für eine der Drehfeder parallel geschaltete Drehdämpfung gibt es gegenläufige Anforderungen. So steht eine kleine Dämpfung für gute Isolation, während eine hohe Dämpfung für kleine Amplituden beim Resonanzdurchlauf sowie beim Motorstart und Motorstopp vorteilhaft wäre. Die nach dem Stand der Technik übliche, aus Komfortgründen klein gewählte Drehdämpfung führt deshalb oft zu unerwünschten hohen Amplituden oder sogar zu sogenannten Resonanzhängern, d.h. der Resonanzdurchlauf gelingt nicht.

Das Dämpfungsvermögen einer mit einem Dämpfungsfluid betriebenen Dämpfungseinrichtung wird dabei maßgeblich von dem verwendeten Dämpfungsfluid und dem Strömungswiderstand der Dämpfungseinrichtung abhängen. Die aus der Praxis bekannten Dämpfungseinrichtungen sind hinsichtlich des vorgegebenen Dämpfungsvermögens darauf ausgelegt, die Schwingungen des Antriebsstrangs eines Kraftfahrzeugs mit einem Verbrennungsmotor während dessen Betrieb gut zu isolieren. Die bei einem Startvorgang oder Abstellvorgang des Verbrennungsmotors auftretenden resonanten Schwingungen können oftmals nur unzureichend gedämpft werden.

Weiterhin hat sich gezeigt, dass die aus der Praxis bekannten Fluid verdrängenden Dämpfungseinrichtungen üblicherweise mit einem Dämpfungsfluid betrieben werden, dessen Viskosität stark temperaturabhängig ist. In Abhängigkeit von der sich temperaturbedingt ändernden Viskosität ändert sich in entsprechender Weise auch die Dämpfungswirkung der Fluid verdrängenden Dämpfungseinrichtung. Dies führt dazu, dass die Wirkung der Dämpfungseinrichtung teilweise sehr stark von der jeweils aktuellen Betriebstemperatur der drehelastischen Kupplungseinrichtung und insbesondere des darin befindlichen Dämpfungsfluids abhängt. Eine derartige Abhängigkeit der Dämpfungswirkung von der Betriebstemperatur ist nicht gewünscht.

Aufgabe der vorliegenden Erfindung ist es demzufolge, eine drehelastische Kupplungseinrichtung der eingangs genannten Gattung konstruktiv einfach und kostengünstig so auszugestalten, dass eine möglichst große Dämpfungswirkung und eine dadurch erreichbare Verringerung der mechanischen Schwingungsbelastung und Geräuschentwicklung des Antriebsstrangs auch bei einem Motorstart und Motorstopp bzw. den hierbei erforderlichen Resonanzdurchläufen erzwungener Schwingungen ermöglicht wird.

Die Aufgabe wird erfindungsgemäß dadurch gelöst, dass die Dämpfungseinrichtung (8) mindestens zwei über eine Drosseleinrichtung (10) miteinander in Verbindung stehende, mit einem Dämpfungsfluid befüllbare Fluidkammern (9) aufweist und dass die Drosseleinrichtung (10) mindestens einen die mindestens zwei Fluidkammern (9) verbindenden Verbindungskanal (13) aufweist, dessen fluiddurchströmbare Querschnittsfläche veränderbar ist.

Durch die Verwendung von zwei oder mehreren Biegedrehfedern kann bei einem vorgegebenen und oftmals möglichst gering zu haltenden Bauraum eine größere Leistungsdichte des Biegedrehfedersatzes erreicht werden, als es mit einer einzelnen Biegedrehfeder möglich wäre. Dies bedeutet, dass bei gleichem Bauraum und gleich bleibender Federrate ein hohes Drehmoment übertragen werden kann oder bei einem gleich bleibend hohen Drehmoment eine niedrigere Federrate erzielt werden kann. Die aus der Praxis bekannten Biegedrehfedern können dabei weitgehend unverändert verwendet werden, so dass keine aufwändige Modifikation erforderlich wäre. Die jeweiligen Abmessungen der einzelnen miteinander verbundenen Biegedrehfedern können dabei zweckmäßigerweise so aufeinander abgestimmt sein, dass die Biegedrehfedern beispielsweise konzentrisch und im Wesentlichen in einer Ebene senkrecht zur Drehachse angeordnet sein können, so dass insbesondere in axialer Richtung lediglich ein geringer Bauraum zur Verfügung stehen muss und die miteinander kombinierten Biegedrehfedern das vorgegebene Volumen bei möglichst geringen Außenabmessungen bestmöglich ausnutzen.

Es ist vorgesehen, dass die Dämpfungseinrichtung mindestens zwei über eine Drosseleinrichtung miteinander in Verbindung stehende, mit einem Dämpfungsfluid befüllbare Fluidkammern aufweist. Zweckmäßigerweise ist vorgesehen, dass das verwendete Dämpfungsfluid gleichzeitig als Schmiermittel für die Biegedrehfedern verwendet wird und dass in den Fluidkammern befindliche Dämpfungsfluid auch die Biegedrehfedern umströmen kann.

Um auch während des Start- und Abstellvorgangs und den dabei auftretenden Drehzahlen eine möglichst gute Dämpfungswirkung zu ermöglichen ist vorgesehen, dass die Drosseleinrichtung mindestens einen die mindestens zwei Fluidkammern verbindenden Verbindungskanal aufweist, dessen fluiddurchströmbare Querschnittsfläche veränderbar ist. Während des Start- und Abstellvorgangs des Verbrennungsmotors kann die fluiddurchströmbare Querschnittsfläche des Verbindungskanals verkleinert und der Strömungswiderstand dadurch erhöht werden, so dass eine asymptotische oder überkritische Dämpfung beim Start- und Abstellvorgang erreicht werden kann. Während des normalen Betriebs des Verbrennungsmotors kann die fluiddurchströmbare Querschnittsfläche vergrößert werden, so dass der Strömungswiderstand und damit die Dämpfungswirkung der Drosseleinrichtung an den normalen Betrieb angepasst und eine optimale Bedämpfung der während des normalen Betriebs auftretenden Schwingungen ermöglicht wird.

Mit einfachen Mitteln kann eine geeignete Veränderung der Querschnittsfläche des Verbindungskanals dadurch erreicht werden, dass in dem Verbindungskanal ein radial zwischen einer den Verbindungskanal verschließenden Verschlussstellung und einer den Verbindungskanal öffnenden Durchlassstellung verlagerbares Verschlusselement aufweist. Die von dem Verschlusselement in seiner Durchlassstellung vorgegebene, beziehungsweise freigegebene Querschnittsfläche des Verbindungskanals ist dabei zweckmäßigerweise so bemessen, dass der Strömungswiderstand der Drosseleinrichtung in Abhängigkeit von dem verwendeten Dämpfungsfluid eine an den normalen Betrieb des Verbrennungsmotors angepasste Dämpfungswirkung ergibt. In seiner Verschlussstellung bewirkt das in dem Verbindungskanal angeordnete Verschlusselement eine deutlich höhere, beziehungsweise asymptotische oder überkritische Bedämpfung der drehelastischen Kupplungseinrichtung, so dass nahezu keine resonanten Schwingungen auftreten.

Gemäß einer vorteilhaften Ausgestaltung des Erfindungsgedankens ist vorgesehen, dass das Verschlusselement entgegen der Rückstellkraft einer Federeinrichtung verlagerbar ist. Ganz besonders vorteilhaft ist es dabei, wenn die Rückstellkraft der Federeinrichtung radial gerichtet und in Abhängigkeit von der Masse des Verschlusselements so vorgegeben ist, dass sich das Verschlusselement bei einer vorgebbaren Umdrehungszahl der drehelastischen Kupplungseinrichtung von der Verschlussstellung in die Durchlassstellung verlagert. Auf diese Weise kann mit einfachen konstruktiven Mitteln eine drehzahlabhängige Veränderung der Dämpfungswirkung der Dämpfungseinrichtung herbeigeführt werden. Eine gesonderte Steuereinrichtung, welche in Abhängigkeit von der beispielsweise mittels Sensoren zu ermittelnden Drehzahl den Strömungswiderstand und damit die Dämpfungswirkung der Drosseleinrichtung verändert, ist demzufolge nicht notwendig.

Die maximale Verlagerung des Verschlusselements in radialer Richtung wird dadurch begrenzt, dass die Federeinrichtung das Verschlusselement in radialer Richtung gegen eine Anschlagfläche abstützt.

Sollte es in Einzelfällen erforderlich werden oder vorteilhaft sein, so kann vorgesehen sein, dass das fluiddurchströmbare Aussparungen und/oder Bypasskanäle im Bereich um das verlagerbare Verschlusselement angeordnet sind.

Zusätzlich oder ergänzend hierzu kann vorgesehen sein, dass die Drosseleinrichtung mindestens ein Überdruckventil aufweist. Zweckmäßigerweise weist dabei das mindestens eine Überdruckventil einen entgegen einer Rückstellkraft einer Überdruckventil-Federeinrichtung verlagerbaren Ventilkörper auf. Insbesondere während der asymptotischen oder überkritischen Bedämpfung bei dem Start- und Abstellvorgang des angeschlossenen Verbrennungsmotors können kurzzeitig sehr große Druckkräfte auf das Dämpfungsfluid einwirken. Um eine übermäßige mechanische Beanspruchung der die Fluidkammern begrenzenden Bauteile und der Drosseleinrichtung insbesondere bei tiefen Temperaturen zu vermeiden, wird durch das Überdruckventil eine Umlagerung des Dämpfungsfluids zwischen den mindestens zwei Fluidkammern ermöglicht und die Dämpfungswirkung auf zulässige Werte begrenzt.

Vorzugsweise ist vorgesehen, dass die mindestens zwei Biegedrehfedern parallel wirkend miteinander verbunden sind. Je nach den vorgegebenen Anforderungen an die drehelastische Kupplungseinrichtung können auch eine Reihenschaltung oder im Falle von mehreren Biegedrehfedern eine gemischte Anordnung der einzelnen Biegedrehfedern zweckmäßig und vorteilhaft sein.

Zur Vermeidung einer unerwünschten Unwucht während des Betriebs ist vorgesehen, dass jeder Biegedrehfeder Führungsmittel zugeordnet sind, welche bei einem Aufweiten oder Kontrahieren der zugeordneten Biegedrehfeder eine konzentrische Anordnung dieser Biegedrehfeder vorgeben. Die Führungsmittel können Führungshülsen aufweisen, auf oder in denen Führungsstege gleiten.

Es ist auch denkbar, den Biegedrehfedern Koppelringe mit Nocken und Führungsstegen zuzuordnen. Als besonders vorteilhaft hat sich die Anformung der Führungsstege an die Nocken herausgestellt, wobei die Nocken gleichzeitig die Führungsstege bilden. Sofern es zweckmäßig erscheint, können auch Kompensationsmassen vorgesehen sein, die derart angeordnet sind, dass sie sich im Falle der nicht belasteten Biegedrehfeder bezogen auf die Drehachse gegenüber liegen und im Falle einer Relativverdrehung der jeweiligen Enden der Biegedrehfeder eine dadurch bewirkte Unwucht kompensieren bzw. weitgehend unterdrücken.

Einer besonders vorteilhaften Ausgestaltung des Erfindungsgedankens zufolge ist vorgesehen, dass die Dämpfungseinrichtung radial im Abstand zu den mindestens zwei Biegedrehfedern angeordnet ist. Die Dämpfungseinrichtung kann dabei relativ zur Drehachse innen angeordnet und von den Biegedrehfedern umgeben sein oder aber die Biegedrehfedern außen umgeben. Auf diese Weise kann eine drehelastische Kupplungseinrichtung mit einer großen Leistungsdichte der Biegedrehfedern und mit einer erforderlichen Drehdämpfungshöhe bei geringer axialer Erstreckung ausgestaltet sein. Eine geringe axiale Ausdehnung in der Kupplungseinrichtung ist insbesondere bei einer drehelastischen Dämpfung des Antriebsstrangs von Kraftfahrzeugen ein wesentlicher Vorteil.

Das Dämpfungsvermögen der Dämpfungseinrichtung kann in vorteilhafter Weise dadurch beeinflusst werden, dass die Fluidkammern nur teilweise mit einem flüssigen Dämpfungsfluid befüllt sind. Während des Betriebs wird sich das flüssige Dämpfungsfluid auf Grund der Drehbewegung der drehelastischen Kupplungseinrichtung in den radial außen liegenden Bereichen der Fluidkammern ansammeln. In den radial innen liegenden Bereichen verbleibt ein Luftpolster. Bei einer drehelastischen Beanspruchung der Kupplungseinrichtung bilden sich diese Luftpolster insbesondere um die das flüssige Dämpfungsfluid verdrängenden Bauteile wie beispielsweise in die Fluidkammern ragende Stege oder die Drosseleinrichtung aus und bewirken eine kleine Dämpfung bei kleinen Amplituden. Bei großen Amplituden wird nach dem Umverlagern der Luft und/oder einer Verdichtung der Luftpolster die erforderliche hohe Dämpfung bereitgestellt. Gleichzeitig wird durch die teilweise Befüllung der Fluidkammern mit einem flüssigen Dämpfungsfluid auch der temperaturabhängigen Wärmeausdehnung der geeigneten flüssigen Dämpfungsfluide Rechnung getragen. Die während des Betriebs mit steigender Temperatur auftretende Wärmeausdehnung eines geeigneten flüssigen Dämpfungsfluids kann bei einer teilweisen Befüllung der Fluidkammern mit diesem Dämpfungsfluid durch das verbleibende Luftpolster ausgeglichen werden, ohne dass bei einer Anordnung, die zur Umgebung hin dicht ist, ein übermäßiger Druckanstieg erfolgt, der eine unerwünscht hohe mechanische Belastung der drehelastischen Kupplungseinrichtung zur Folge hätte.

Es hat sich gezeigt, dass die hinsichtlich vieler Anforderungen für eine Verwendung als flüssiges Dämpfungsfluid geeigneten Polyglykolöle eine stark temperaturabhängige Viskosität aufweisen und sich das Dämpfungsvermögen der Dämpfungseinrichtung bei Verwendung von beispielsweise Polyglykolölen mit zunehmender oder abnehmender Temperatur stark verändert. Das Dämpfungsvermögen der Dämpfungseinrichtung kann demzufolge bei den bereits bekannten drehelastischen Kupplungseinrichtungen nur innerhalb eines engen Temperaturbereichs so vorgegeben werden, dass eine geeignete Bedämpfung der üblicherweise auftretenden Schwingungen und mechanischen Erschütterungen während des Betriebs möglich ist. Verändert sich die Temperatur, so ändem sich die Viskosität des verwendeten Dämpfungsfluids und damit auch das Dämpfungsvermögen der drehelastischen Kupplungseinrichtung in einem oftmals unerwünscht großen Ausmaß.

Um eine temperaturbedingt hervorgerufene Veränderung des Dämpfungsvermögens in einem vorgegebenen kleinen Bauraum möglichst gut kompensieren zu können ist es gemäß einer vorteilhaften Ausgestaltung des Erfindungsgedankens vorgesehen, dass die Drosseleinrichtung in dem Verbindungskanal ein in seiner Formgebung veränderbares Drosselelement aufweist. Die Formgebung des veränderbaren Drosselelements kann dabei zweckmäßigerweise derart verändert werden, dass der durch das Drosselelement bewirkte Strömungswiderstand für das Dämpfungsfluid eine temperaturbedingt sich ändernde Viskosität des Dämpfungsfluids möglichst kompensiert.

Es kann auch vorgesehen sein, dass das Drosselelement verlagerbar ist und eine Außenwand des Drosselelements zumindest abschnittsweise eine die fluiddurchströmbare Querschnittsfläche des Verbindungskanals begrenzende Seitenwand des Verbindungskanals bildet. Wird die Außenwand des Drosselelements in den Verbindungskanal hinein verlagert, so wird dadurch die Querschnittsfläche des Verbindungskanals verringert. Wird dagegen die Außenwand des Drosselelements aus dem Verbindungskanal heraus verlagert, so vergrößert sich die Querschnittsfläche des Verbindungskanals entsprechend.

Eine geeignete Verlagerung eines relevanten Bereichs der Außenwand kann in einfacher Weise dadurch bewirkt werden, dass in einem Innenraum des Drosselelements mindestens ein Dehnkörper angeordnet Ist. Eine Ausdehnung des Dehnkörpers kann bei einer geeigneten Festlegung des Dehnkörpers unmittelbar eine entsprechende Verlagerung der Außenwand und eine damit einhergehend veränderteQuerschnittsfläche des Verbindungskanals bewirken.

Um In einfacher Welse eine temperaturabhängige Veränderung der fluiddurchströmbaren Querschnittsfläche des Verbindungskanals und damit dessen Strömungswiderstands herbeiführen zu können ist vorgesehen, dass der Dehnkörper sich bei steigender Temperatur ausdehnt und durch eine dadurch bedingte Verformung der Außenwand die fluiddurchströmbare Querschnittsfläche des Verbindungskanals verringert.

Gemäß einer besonders vorteilhaften Ausgestaltung des Erfindungsgedankens ist vorgesehen, dass die temperaturbedingte Ausdehnung des Dehnkörpers an die temperaturbedingte Änderung der Viskosität des Dämpfungsfluids in geeigneter Weise angepasst ist, so dass in dem Maß, wie sich das Dämpfungsvermögen der Dämpfungseinrichtung auf Grund der temperaturbedingten Viskositätsänderung des Dämpfungsfluids ändern würde, eine diese Änderung weitgehend kompensierende Veränderung der Querschnittsfläche des Verbindungskanals durch die ebenfalls temperaturbedingte Ausdehnung des Dehnkörpers herbeigeführt wird.

Durch eine geeignete Anpassung und Abstimmung der temperaturbedingten Ausdehnung des Dehnkörpers an das verwendete Dämpfungsfluid und insbesondere dessen temperaturbedingte Viskositätsänderung kann dabei mit einfachen Mitteln eine über einen großen Temperaturbereich näherungsweise gleich bleibende Dämpfungswirkung der Dämpfungseinrichtung gewährleistet werden.

Da das in seinen Abmessungen veränderbare Drosselelement in der Dämpfungseinrichtung angeordnet ist und keinen zusätzlichen Bauraum beansprucht, können die Dämpfungseigenschaften der drehelastischen Kupplungseinrichtung bei einem möglichst geringen Bauraum in vorteilhafter Weise verbessert werden.

Es ist ohne Weiteres möglich, dass das die temperaturbedingte Viskositätsänderung des Dämpfungsfluid kompensierende Drosselelement und das drehzahlabhängig die Dämpfungswirkung verändernde Verschlusselement miteinander kombiniert und in einem Bauteil verwirklicht werden können.

Es ist natürlich ebenso denkbar, dass ein in seinen Abmessungen veränderbares Drosselelement unabhängig von einem verlagerbaren Verschlusselement in einer drehelastischen Kupplungseinrichtung angeordnet ist.

Eine erfindungsgemäße Kompensation der sich temperaturbedingt ändernden Viskosität des verwendeten Dämpfungsfluids durch Verwendung eines in seinen Abmessungen veränderbaren Drosselelements kann natürlich auch erfindungsgemäß mit anderen drehelastischen Kupplungseinrichtungen kombiniert werden, die beispielsweise lediglich eine schraubenförmige Biegedrehfeder aufweisen. In gleicher Weise kann auch ein gegebenenfalls drehzahlabhängig radial verlagerbares Verschlusselement mit drehelastischen Kupplungseinrichtungen mit beispielsweise nur einer Biegedrehfeder kombiniert werden, um bei geringen Drehzahlen eine asymptotische oder überkritische Bedämpfung der in diesen Drehzahlbereichen üblicherweise auftretenden resonanten Schwingungen zu ermöglichen.

Es ist ebenso denkbar, dass die vorgenannte Kompensation der sich temperaturbedingt ändernden Viskosität mit einer formschlüssigen oder reibschlüssigen Verbindung zwischen An- und Abtriebswelle kombiniert wird, welche die Relativbewegung zwischen An- und Abtriebswelle während des Motor-Starts/Stopps verhindert oder deutlich reduziert.

Nachfolgend wird ein Ausführungsbeispiel des Erfindungsgedankens näher erläutert, das in der Zeichnung dargestellt ist. Es zeigt:
Figur 1 eine Schnittansicht senkrecht zur Drehachse einer drehelastische Kupplungseinrichtung mit zwei konzentrisch angeordneten Biegedrehfedern und einer innen angeordneten Dämpfungseinrichtung,
Figur 2 eine halbseitige Schnittansicht längs der Drehachse der in Figur 1 dargestellten drehelastischen Kupplungseinrichtung,
Figur 3 eine vergrößert dargestellte Schnittansicht eines radial verlagerbaren Verschlusselements, das in der Dämpfungseinrichtung der in den Figuren 1 und 2 dargestellten drehelastischen Kupplungseinrichtung enthalten ist und
Figur 4 eine qualitative Darstellung der mittels Simulationen berechneten Dämpfungswirkung der Dämpfungseinrichtung mit, beziehungsweise ohne eine erfindungsgemäße Kompensation der Temperatur abhängigen Viskositätsänderung eines verwendeten Dämpfungsfluids.

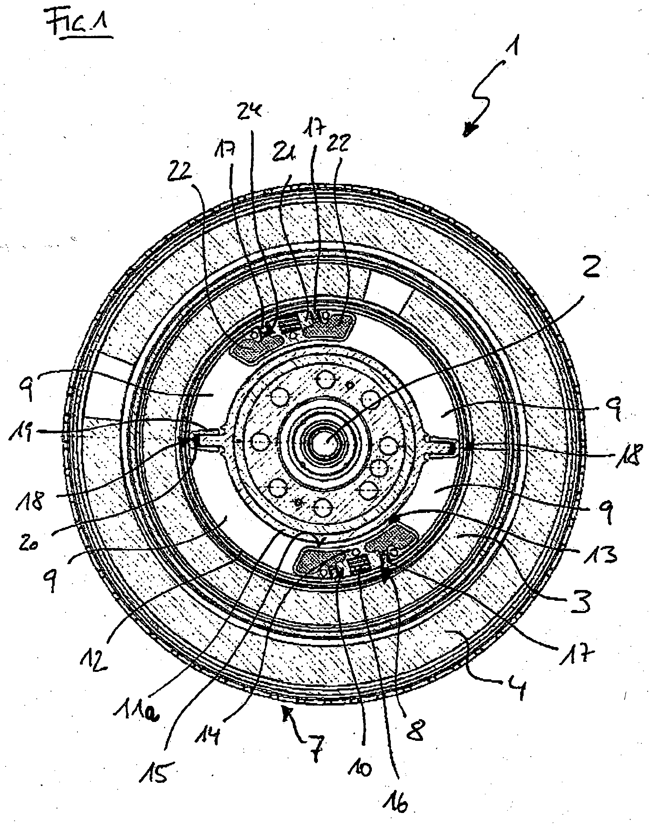

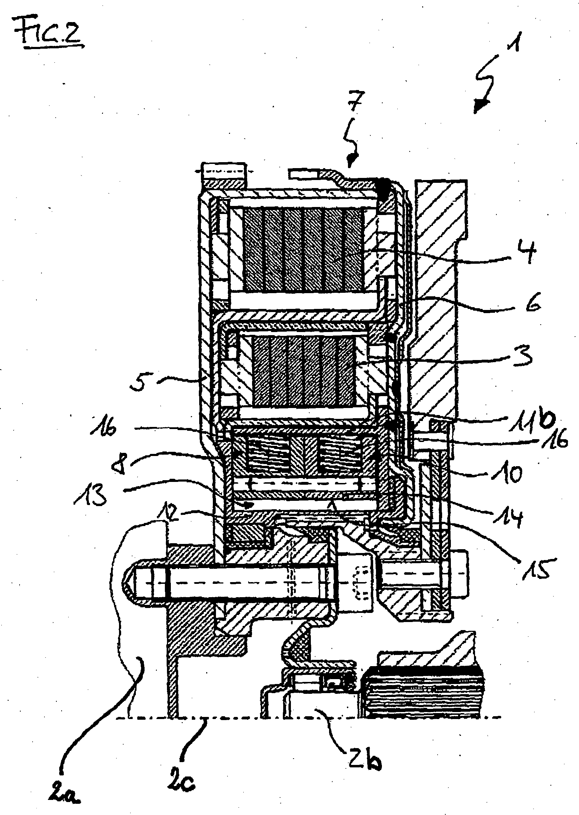

Eine in den Figuren 1 und 2 beispielhaft dargestellte drehelastische Kupplungseinrichtung 1 weist zwei konzentrisch angeordnete Biegedrehfedern 3, 4 auf. Die Biegedrehfedern 3, 4 weisen mehrere Windungen auf und sind an ihren jeweiligen Enden jeweils an einer sich im Wesentlichen senkrecht zur Drehachse 2c erstreckenden Seitenwand 5, 6 eines Gehäuses 7 der drehelastischen Kupplungseinrichtung 1 festgelegt. Die beiden Seitenwände 5 und 6 des Gehäuses 7 sind mit einer der Antriebswelle 2a, bzw. mit einer der Antriebswelle 2b verbunden und können entgegen dem rückstellenden Drehmoment der Biegedrehfedern 3, 4, relativ zueinander verdreht werden. Auf diese Weise wird eine Drehbewegung des Antriebsstrangs relativ zu dem Abtriebsstrang ermöglicht.

Zwischen der innenliegenden Biegedrehfeder 3 und der Drehdämpfemabe 11a ist eine Dämpfungseinrichtung 8 angeordnet. Die Dämpfungseinrichtung 8 weist vier Fluidkammern 9 auf, von denen jeweils zwei Fluidkammern 9 über eine Drosseleinrichtung 10 miteinander in Verbindung stehen. Die Fluidkammern 9 werden nach innen durch eine innere Hülse 11a und eine äußere Hülse 11b begrenzt. Die innere Hülse 11 a und die äußere Hülse 11 b sind starr mit den der Abtriebswelle zugeordneten Gehäuseteilen, bzw. starr mit den der Antriebswelle zugeordneten Gehäuseteilen verbunden, Bei einer Verdrehung der Antriebswelle relativ zu der Antriebswelle verdreht sich die innere Hülse 11a in gleicher Weise relativ zu der äußeren Hülse 11b, Die Drosseleinrichtung 10 ist an der äußeren Hülse 11 b festgelegt.

In den Fluidkammern 9 befindet sich ein geeignetes Dämpfungsfluid, beispielsweise Polyglycolöl. Bei einer Relatiwerdrehung der beiden Hülsen 11 a und 11 b wird die Drosseleinrichtung 10 in Umfangsrichtung relativ zur Nabe verlagert, so dass sich die jeweiligen Volumina der zugeordneten Fluidkammern 9 gegenläufig verändern. Dies führt zu einer erzwungenen Umveriagerung des in den Fluidkammern 9 befindlichen Dämpfungsfluids. Eine der jeweiligen Volumenänderung der Fluidkammern 9 angepasste Menge des Dämpfungsfluids muss dabei von der sich verkleinernden Fluidkammer 9 durch einen von der Drosseleinrichtung 10 gebildeten Verbindungskanal 13 hindurch in die sich vergrößernde Fluidkammer 9 strömen. Die gegenüber den Fluidkammern 9 verringerte Querschnittsfläche des Verbindungskanals 13 bewirkt einen Strömungswiderstand für das durchströmende Dämpfungsfluid und führt letztendlich zu einer Dämpfung der Drehbewegung.

Die Drosseleinrichtung 10 weist ein radial verlagerbares Verschlusselement 14 auf. Das Verschlusselement 14 weist eine an die innere Hülse 11a angepasste Außenwand 15 auf, die gemeinsam mit dem zugeordneten Bereich der inneren Hülse 11a den Verbindungskanal 13 bildet, bzw. begrenzt.

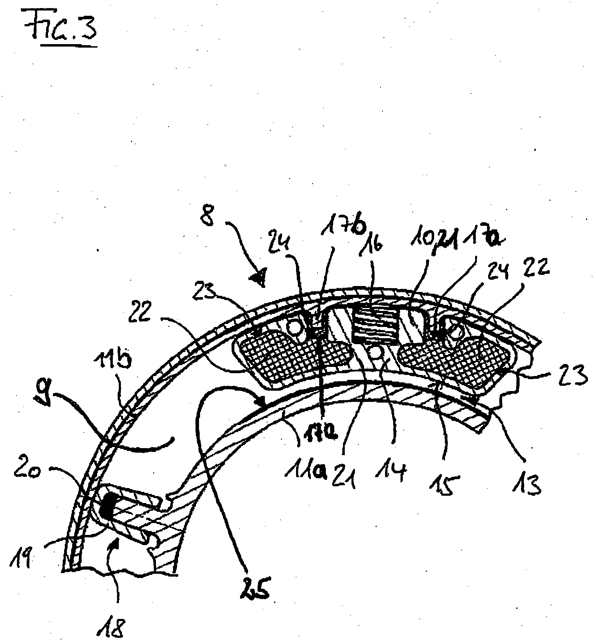

Das Verschlusselement 14, in Fig. 3 vergrößert dargestellt, stützt sich entgegen der Rückstellkraft zweier Schraubenfedern 16 an der äußeren Hülse 11 b ab. Eine Auslenkung des Verschlusselements 14 in Umfangsrichtung relativ zu der äußeren Hülse 11 b wird durch in das Verschlusselement 14 ragende Stützstege 17b verhindert, die an der äußeren Hülse 11b angeformt sind. Die Rückstellkraft der Schraubenfedern 16 ist derart auf das Verschlusselement 14 abgestimmt, dass bei einem Stillstand der drehelastischen Kupplungseinrichtung 1, bzw. bei geringen Umdrehungszahlen das Verschlusselement 14 in Richtung zur Drehachse 2c, bzw. in Richtung zur inneren Hülse 11a gepresst wird. Die Außenwand 15 des Verschlusselements 14 kommt dabei eng anliegend mit dem zugeordneten Bereich der inneren Hülse 11a in Kontakt und verschließt den Verbindungskanal 10. Dies entspricht einer maximalen Bedämpfung. Bei zunehmenden Umdrehungszahlen bewirken die auf das Verschlusselement 14 einwirkenden und ebenfalls zunehmenden Fliehkräfte, dass das Verschlusselement 14 entgegen der Rückstellkraft der Schraubenfeder 16 nach außen verlagert wird. Das Verschlusselement 14 verlagert sich von der inneren Hülse 11a in Richtung zur äußeren Hülse 11 b und gibt den Verbindungskanal 13 frei. Bei üblichen Umdrehungszahlen während des normalen Betriebs wird das Verschlusselement 14 auf die Anlageflächen 17a der mit Kappen versehenen Stege 17b gepresst, so dass der Verbindungskanal 13 die maximal erreichbare Querschnittsfläche aufweist und die vorgegebene Bedämpfung während des Betriebs bewirkt wird.
Das Verschlusselement 14 und die Position der am Umfang nach innen ragenden Stege 17b sind so gestalten, dass bei allseitige Druckbeaufschlagung im Betrieb das Verschlusselement 14 statisch in radialer, d.h. den Spalt bestimmenden Richtung, druckenlastet ist.

Um bei geringen Umdrehungszahlen eventuell kurzzeitig auftretende übermäßige Druckkräfte in den Fluidkammern 9 auf zulässige Werte begrenzen zu können stehen jeweils zwei aneinandergrenzende Fluidkammern 9 an einem der Drosseleinrichtung 10 abgewandten Ende über ein Überdruckventil 18 in Verbindung. Bei einer übermäßigen mechanischen Beanspruchung verlagert sich ein Ventilkörper 19 entgegen die Rückstellkraft einer Überdruckventil-Federeinrichtung 20 radial nach innen und lässt einen Fluidausgleich zwischen den benachbarten Fluidkammern 9 zu.

Die Drosseleinrichtung 10 weist weiterhin ein Drosselelement 21 auf. In dem abgebildeten Ausführungsbeispiel ist das Drosselelement 21 in dem Verschlusselement 14 verwirklicht. Es ist jedoch denkbar, dass das Drosselelement 21 und das Verschlusselement 14 an unterschiedlichen Positionen und baulich voneinander getrennt in der drehelastischen Kupplungseinrichtung vorgesehen und ausgebildet sind.

Das Drosselelement 21 weist zwei Dehnkörper 22 auf, die in daran angepassten Ausnehmungen 23 angeordnet sind. Bei zunehmender Temperatur dehnen sich die Dehnkörper 22 aus. Die Ausnehmungen 23 münden in Öffnungen 24, die den Stützstegen 17 zugeordnet und an diese angepasst sind. Bei einer Ausdehnung der Dehnkörper 22 bewirkt die Volumenänderung eine Verlagerung des Drosselelements 21 in Richtung der Drehachse 2c, bzw. in Richtung der inneren Hülse 11a und verringert dadurch die durchströmbare Querschnittsfläche des Verbindungskanals 13. Auf diese Weise wird der üblicherweise mit zunehmender Temperatur abnehmenden Viskosität des Dämpfungsfluids entgegengewirkt, in dem der Strömungswiderstand der Drosseleinrichtung 10 durch eine Verkleinerung der Querschnittsfläche des Verbindungskanals 13 erhöht wird. Bei einer geeigneten Abstimmung der Drosseleinrichtung 10 kann dadurch die temperaturbedingte Veränderung der Viskosität des Dämpfungsfluids weitgehend kompensiert werden. Zweckmäßigerweise ist die temperaturbedingte Ausdehnung der Dehnkörper 22 einschließlich der zwischengeschalteten mechanischen Übersetzung an die temperaturbedingte Änderung der Viskosität des Dämpfungsfluids angepasst.

Es ist ebenso denkbar, dass die vorgenannte Kompensation der sich temperaturbedingt ändernden Viskosität mit einer formschlüssigen oder reibschlüssigen Verbindung zwischender Antriebswelle und der Abtriebswelle kombiniert wird, die die Relativbewegung zwischen der An- und Abtriebswelle während des Motor-Starts/Stopps verhindert oder deutlich reduziert.

Weiterhin kann vorgesehen sein, dass beispielsweise die innere Hülse 11a im Bereich der Drosseleinrichtung 10 eine den Verbindungskanal 13 vergrößernde Ausnehmung 25 aufweist, die in Richtung der jeweils abgewandten Enden der Fluidkammern 9 kleiner wird, bzw. vollständig verschwinden.
Bei kleinen Auslenkungen der Drosseleinrichtung 10 ist die Querschnittsfläche des Verbindungskanals 13 vergrößert. Bei großen Auslenkungen wird der dämpfungsbestimmende spaltförmige Querschnitt des Verbindungskanals 13 durch die kleiner werdende Ausnehmung 25 verkleinert. Mit dem Verlauf der Querschnittsfläche des Verbindungskanals 13 in Abhängigkeit vom Verdrehwinkel lässt sich die erforderliche Dämpfungsprogression bis zu der jeweils maximalen Auslenkung, bzw. Endlage der Drosseleinrichtung 10 vorgeben.

Es ist für einen Fachmann offensichtlich, dass abweichend von dem lediglich zur Veranschaulichung dargestellten Ausführungsbeispiel eine Dämpfungseinrichtung 8 auch entweder nur eine vorangehend beschriebene Drosseleinrichtung 10 oder nur ein vorangehend ebenfalls beschriebenes Drosselelement 21 aufweisen kann. Falls beide in einer drehelastischen Kupplungseinrichtung 1 verwirklicht sind, können die Drosseleinrichtung 10 und Drosselelemente 21 auch unabhängig voneinander und räumlich getrennt in der drehelastischen Kupplungseinrichtung 1 angeordnet sein.

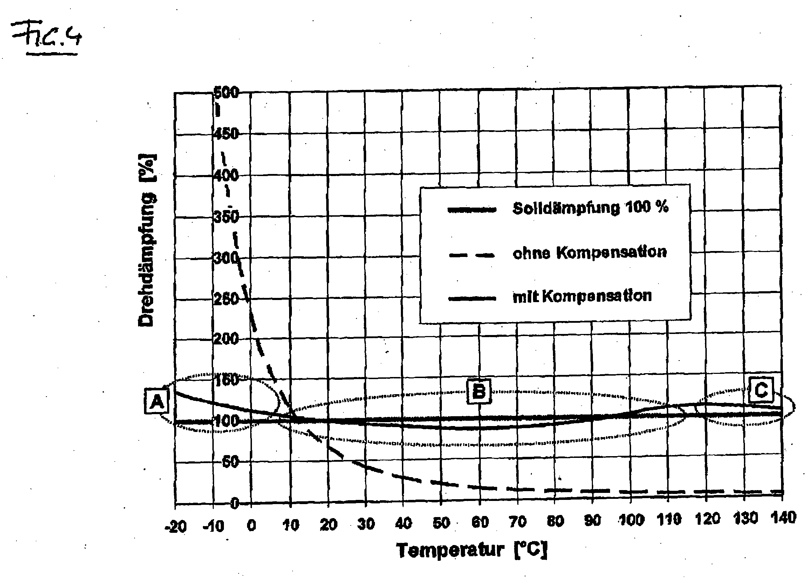

Aus Fig. 4 ist der qualitativen Verlauf der Drehdämpfung über der Temperatur zu entnehmen. Die gestrichelte Linie zeigt für den nicht kompensierten Fall näherungsweise hyperbolischen Verlauf. Die durchgezogenen Linie zeigt den Verlauf mit Kompensation, welcher in drei Temperaturbereiche A, B und C unterteilt werden kann. Der Bereich B wird in erster Linie durch die näherungsweise linear mit der Temperatur verlaufende Verkleinerung des Verbindungskanals (13) (veränderliche Drossel) bestimmt. Bei ca. 20°C und bei ca. 95°C gelingt es den Einfluss der sich ändernden Viskosität ideal zu kompensieren. Im Temperaturbereich dazwischen ist eine gute Annäherung an den Idealverlauf zu verzeichnen. Im Bereich A bestimmen die Überdruckventile (18) und im Bereich C nicht näher beschriebene Bypässe den Verlauf der Drehdämpfung über der Temperatur.

## Patentansprüche

1. Drehelastische Kupplungseinrichtung (1) mit mindestens zwei miteinander verbundenen Biegedrehfedern (3, 4), wobei mindestens eine schraubenförmige Biegedrehfeder (3, 4) konzentrisch um eine Drehachse angeordnet ist, wobei eine Antriebswelle und eine Abtriebswelle jeweils mit den Biegedrehfedern (3,4) in Wirkverbindung bringbar und entgegen einem rückstellenden Drehmoment der Biegedrehfedern (3, 4) relativ zueinander um die Drehachse verdrehbar sind und mit einer Dämpfungseinrichtung (8), **dadurch gekennzeichnet, dass** die Dämpfungseinrichtung (8) mindestens zwei über eine Drosseleinrichtung (10) miteinander in Verbindung stehende, mit einem Dämpfungsfluid befüllbare Fluidkammern (9) aufweist und dass die Drosseleinrichtung (10) mindestens einen die mindestens zwei Fluidkammern (9) verbindenden Verbindungskanal (13) aufweist, dessen fluiddurchströmbare Querschnittsfläche veränderbar ist.

2. Drehelastische Kupplungseinrichtung nach Anspruch 1, **dadurch gekennzeichnet, dass** in dem Verbindungskanal (13) ein radial zwischen einer den Verbindungskanal (13) verschließenden Verschlussstellung und einer den Verbindungskanal (13) öffnenden Durchlassstellung verlagerbares Verschlusselement (14) aufweist.

3. Drehelastische Kupplungseinrichtung nach Anspruch 2, **dadurch gekennzeichnet, dass** das Verschlusselement (14) entgegen der Rückstellkraft einer Federeinrichtung verlagerbar ist.

4. Drehelastische Kupplungseinrichtung nach Anspruch 3, **dadurch gekennzeichnet, dass** die Rückstellkraft der Federeinrichtung radial gerichtet und in Abhängigkeit von der Masse des Verschlusselements (14) so vorgegeben ist, dass sich das Verschlusselement (14) bei einer vorgebbaren Umdrehungszahl der drehelastischen Kupplungseinrichtung (1) von der Verschlussstellung in die Durchlassstellung verlagert,

5. Drehelastische Kupplungseinrichtung nach Anspruch 3 oder Anspruch 4, **dadurch gekennzeichnet, dass** die Federeinrichtung das Verschlusselement (14) in radialer Richtung gegen eine Anschlagsfläche abstützt.

6. Drehelastische Kupplungseinrichtung nach einem der Ansprüche 2 bis 5, **dadurch gekennzeichnet, dass** fluiddurchströmbare Aussparungen und/oder Bypasskanäle im Bereich um das verlagerbare Verschlusselement (14) angeordnet sind.

7. Drehelastische Kupplungseinrichtung nach einem der vorangehenden Ansprüche, **dadurch gekennzeichnet, dass** die Dämpfungseinrichtung (8) mindestens ein Überdruckventil (18) aufweist.

8. Drehelastische Kupplungseinrichtung nach Anspruch 7, **dadurch gekennzeichnet, dass** das mindestens eine Überdruckventil (18) einen entgegen einer Rückstellkraft einer Überdruckventil-Federeinrichtung (20) verlagerbaren Ventilkörper (19) aufweist.

9. Drehelastische Kupplungseinrichtung nach einem der vorangehenden Ansprüche, **dadurch gekennzeichnet, dass** die mindestens zwei Biegedrehfedern (3, 4) parallel wirkend miteinander verbunden sind.

10. Drehelastische Kupplungseinrichtung nach einem der vorangehenden Ansprüche, **dadurch gekennzeichnet, dass** die mindestens zwei Biegedrehfedern (3, 4) konzentrisch zur Drehachse und im Wesentlichen in einer Ebene senkrecht zur Drehachse angeordnet sind.

11. Drehelastische Kupplungseinrichtung nach einem der vorangehenden Ansprüche, **dadurch gekennzeichnet, dass** jeder Biegedrehfeder (3, 4) Führungsmittel zugeordnet sind, welche bei einem Aufweiten oder einem Kontrahieren eine konzentrische Anordnung der Biegedrehfeder (3, 4) vorgeben.

12. Drehelastische Kupplungseinrichtung nach einem der vorangehenden Ansprüche, **dadurch gekennzeichnet, dass** die Dämpfungseinrichtung (8) radial im Abstand zu den mindestens zwei Biegedrehfedern (3, 4) angeordnet ist.

13. Drehelastische Kupplungseinrichtung nach einem der vorangehenden Ansprüche, **dadurch gekennzeichnet, dass** die Fluidkammern (9) nur teilweise mit einem flüssigen Dämpfungsfluid befüllt sind.

14. Drehelastische Kupplungseinrichtung nach einem der vorangehenden Ansprüche, **dadurch gekennzeichnet, dass** als Dämpfungsfluid ein Polyglykolöl verwendet wird.

15. Drehelastische Kupplungseinrichtung nach einem der vorangehenden Ansprüche, **dadurch gekennzeichnet, dass** die Drosseleinrichtung (10) in dem Verbindungskanal (13) ein in seiner Formgebung veränderbares Drosselelement (21) aufweist.

16. Drehelastische Kupplungseinrichtung nach Anspruch 15, **dadurch gekennzeichnet, dass** das Drosselelement (21) verlagerbar ist und eine Außenwand des Drosselelements (21) zumindest abschnittsweise die fluiddurchströmbare Querschnittsfläche des Verbindungskanals (13) begrenzende Seitenwand des Verbindungskanals (13) bildet.

17. Drehelastische Kupplungseinrichtung nach Anspruch 15 oder 16, **dadurch gekennzeichnet, dass** in einem Innenraum des Drosselelements (21) mindestens ein Dehnkörper (22) angeordnet ist.

18. Drehelastische Kupplungseinrichtung nach Anspruch 17, **dadurch gekennzeichnet, dass** der Dehnkörper (22) sich bei steigender Temperatur ausdehnt und durch eine dadurch bedingte Verformung oder Verlagerung der Außenwand die fluiddurchströmbare Querschnittsfläche des Verbindungskanals (13) verringert.

19. Drehelastische Kupplungseinrichtung nach Anspruch 18, **dadurch gekennzeichnet, dass** die temperaturbedingte Ausdehnung des Dehnkörpers (22) an die temperaturbedingte Änderung der Viskosität des Dämpfungsfluids angepasst ist.

## Claims

1. A torsionally flexible coupling device (1) with at least two flexural torsion springs (3, 4) that are connected to each other, wherein at least one helical flexural torsion spring (3, 4) is disposed concentrically about an axis of rotation, wherein an input shaft and an output shaft can each be brought into an operative connection with the flexural torsion springs (3, 4) and can be twisted relative to each other about the axis of rotation against a restoring torque of the flexural torsion springs (3, 4), and with a damping device (8), **characterized in that** the damping device (8) has at least two fluid chambers (9) that are in connection with each other via a throttle device (10) and can be filled with a damping fluid, and that the throttle device (10) comprises at least one connecting channel (13) that connects the at least two fluid chambers (9) and whose cross-sectional area through which fluid can be made to flow is variable.

2. The torsionally flexible coupling device according to claim 1, **characterized in that** in the connecting channel (13), a closure member (14) that is radially displaceable between a closing position closing the connecting channel (13) and a flow-through position opening the connecting channel (13) is comprised.

3. The torsionally flexible coupling device according to claim 2, **characterized in that** the closure member (14) is displaceable against the restoring force of the spring device.

4. The torsionally flexible coupling device according to claim 3, **characterized in that** the restoring force of the spring device is directed in the radial direction and, depending on the mass of the closure member (14), is predefined in such a way that the closure member (14) is displaced from the closing position into the flow-through position at a predefinable rotational speed of the torsionally flexible coupling device (1).

5. The torsionally flexible coupling device according to claim 3 or claim 4, **characterized in that** the spring member supports the closure member (14) in the radial direction against a stop face.

6. The torsionally flexible coupling device according to any one of the claims 2 to 5, **characterized in that** recesses and/or bypass ducts through which fluid can be made to flow are disposed in the area around the closure member (14).

7. The torsionally flexible coupling device according to any one of the preceding claims, **characterized in that** the damping device (8) has at least one pressure relief valve (18).

8. The torsionally flexible coupling device according to claim 7, **characterized in that** the at least one pressure relief valve (18) has a valve body (19) that is displaceable against a restoring force of a pressure relief valve spring device (20).

9. The torsionally flexible coupling device according to any one of the preceding claims, **characterized in that** the at least two flexural torsion springs (3, 4) are connected to each other so as to act in parallel.

10. The torsionally flexible coupling device according to any one of the preceding claims, **characterized in that** the at least two flexural torsion springs (3, 4) are disposed concentrically with the axis of rotation and substantially in a plane perpendicular to the axis of rotation.

11. The torsionally flexible coupling device according to any one of the preceding claims, **characterized in that** guide means, which define a concentric arrangement of the flexural torsion spring (3, 4) during an expansion or contraction, are assigned to each flexural torsion spring (3, 4).

12. The torsionally flexible coupling device according to any one of the preceding claims, **characterized in that** the damping device (8) is arranged radially at a distance from the at least two flexural torsion springs (3, 4).

13. The torsionally flexible coupling device according to any one of the preceding claims, **characterized in that** the fluid chambers (9) are filled only partially with a liquid damping fluid.

14. The torsionally flexible coupling device according to any one of the preceding claims, **characterized in that** a polyglycol oil is used as a damping fluid.

15. The torsionally flexible coupling device according to any one of the preceding claims, **characterized in that** the throttle device (10) in the connecting channel (13) has a throttle member (21) whose shape can be varied.

16. The torsionally flexible coupling device according to claim 15, **characterized in that** the throttle member (21) is displaceable and an outer wall of the throttle member (21) forms, at least in some sections, the side wall of the connecting channel (13) delimiting the cross-sectional area of the connecting channel (13) through which fluid can be made to flow.

17. The torsionally flexible coupling device according to claim 15 or 16, **characterized in that** at least one expansion body (22) is disposed in an inner space of the throttle member (21).

18. The torsionally flexible coupling device according to claim 17, **characterized in that** the expansion body (22) expands when the temperature rises and reduces, by means of a deformation or displacement of the outer wall caused thereby, the cross-sectional area of the connecting channel (13) through which fluid can be made to flow.

19. The torsionally flexible coupling device according to claim 18, **characterized in that** the temperature-related expansion of the expansion body (22) is adapted to the temperature-related change of the viscosity of the damping fluid.

## Revendications

1. Dispositif d'accouplement élastique en torsion (1) comprenant au moins deux ressorts de torsion flexibles (3, 4) reliés l'un à l'autre, dans lesquels au moins un ressort de torsion flexible (3, 4) de forme hélicoïdale est agencé concentriquement autour d'un axe de rotation, de sorte qu'un arbre menant un arbre mené peuvent être respectivement amenés en liaison d'action avec les ressorts de torsion flexibles (3, 4) et susceptibles d'être tournés l'un par rapport à l'autre autour de l'axe de rotation à l'encontre d'un couple de rotation de rappel des ressorts de torsion flexibles (3, 4), et comprenant un dispositif d'amortissement (8), **caractérisé en ce que** le dispositif d'amortissement (8) comprend au moins deux chambres à fluide (9) en communication l'une avec l'autre via un dispositif à étranglement (10) et susceptible d'être remplies avec un fluide d'amortissement, et **en ce que** le dispositif à étranglement (10) comprend au moins un canal de liaison (13) qui relie lesdites au moins deux chambres à fluide (9) et dont la surface de section transversale traversée par l'écoulement de fluide est modifiable.

2. Dispositif d'accouplement élastique en torsion selon la revendication 1, **caractérisé en ce qu'**il comprend dans le canal de liaison (13) un élément obturateur (14) déplaçable radialement entre une position d'obturation qui obture le canal de liaison (13) et une position passante qui ouvre le canal de liaison (13).

3. Dispositif d'accouplement élastique en torsion selon la revendication 2, **caractérisé en ce que** l'élément obturateur (14) est déplaçable à l'encontre de la force de rappel d'un moyen à ressort.

4. Dispositif d'accouplement élastique en torsion selon la revendication 3, **caractérisé en ce que** la force de rappel du moyen à ressort est dirigée radialement et est imposée en fonction de la masse de l'élément obturateur (14) de telle façon que l'élément obturateur (14) se déplace de la position d'obturation vers la position passante pour une vitesse de rotation prédéterminée du dispositif d'accouplement élastique en torsion (1).

5. Dispositif d'accouplement élastique en torsion selon la revendication 3 ou 4, **caractérisé en ce que** le moyen à ressort soutien l'élément obturateur (14) en direction radiale contre une surface de butée.

6. Dispositif d'accouplement élastique en torsion selon l'une des revendications 2 à 5, **caractérisé en ce que** des évidements et/ou des canaux de by-pass, susceptibles d'être traversés par le fluide, sont agencés dans la région autour de l'élément obturateur déplaçable (14).

7. Dispositif d'accouplement élastique en torsion selon l'une des revendications précédentes, **caractérisé en ce que** le dispositif d'amortissement (8) comprend au moins une valve de surpression (18).

8. Dispositif d'accouplement élastique en torsion selon la revendication 7, **caractérisé en ce que** ladite au moins une valve de surpression (18) comprend un corps de valve (19) déplaçable à l'encontre d'une force de rappel d'un moyen à ressort (20) de la valve de surpression.

9. Dispositif d'accouplement élastique en torsion selon l'une des revendications précédentes, **caractérisé en ce que** lesdits au moins deux ressorts de torsion flexibles (3, 4) sont reliés l'un à l'autre de manière à agir en parallèle.

10. Dispositif d'accouplement élastique en torsion selon l'une des revendications précédentes, **caractérisé en ce que** lesdits au moins deux ressorts de torsion flexibles (3, 4) sont agencés concentriquement à l'axe de rotation et sensiblement dans un plan perpendiculaire à l'axe de rotation.

11. Dispositif d'accouplement élastique en torsion selon l'une des revendications précédentes, **caractérisé en ce qu'**à chaque ressort de torsion flexible (3, 4) sont associés des moyens de guidage qui, lors d'un élargissement ou d'une contraction, imposent un agencement concentrique des ressorts de torsion flexibles.

12. Dispositif d'accouplement élastique en torsion selon l'une des revendications précédentes, **caractérisé en ce que** le dispositif d'amortissement (8) est agencé radialement à distance desdits au moins deux ressorts de torsion flexibles (3, 4).

13. Dispositif d'accouplement élastique en torsion selon l'une des revendications précédentes, **caractérisé en ce que** les chambres à fluide (9) sont remplies uniquement partiellement avec un fluide d'amortissement liquide.

14. Dispositif d'accouplement élastique en torsion selon l'une des revendications précédentes, **caractérisé en ce qu'**une huile au polyglycol est utilisée à titre de fluide d'amortissement.

15. Dispositif d'accouplement élastique en torsion selon l'une des revendications précédentes, **caractérisé en ce que** le dispositif à étranglement (10) dans le canal de liaison (13) comprend un élément d'étranglement (21) modifiable quant à sa forme.

16. Dispositif d'accouplement élastique en torsion selon la revendication 15, **caractérisé en ce que** l'élément d'étranglement (21) est déplaçable, et une paroi extérieure de l'élément d'étranglement (21) forme au moins localement la paroi latérale du canal de liaison (13) qui limite la surface de section transversale du canal de liaison (13) susceptible d'être traversée par l'écoulement de fluide.

17. Dispositif d'accouplement élastique en torsion selon la revendication 15 ou 16, **caractérisé en ce qu'**au moins un corps extensible (22) est agencé dans une chambre intérieure de l'élément d'étranglement (21).

18. Dispositif d'accouplement élastique en torsion selon la revendication 17, **caractérisé en ce que** le corps extensible (22) se dilate lorsque la température augmente, et en raison d'une déformation ou d'un déplacement consécutif de la paroi extérieure, la surface de section transversale susceptible d'être traversée par l'écoulement du fluide du canal de liaison (13) diminue.

19. Dispositif d'accouplement élastique en torsion selon la revendication 18, **caractérisé en ce que** la dilatation due à la température du corps extensible (22) est adaptée à la variation due à la température de la viscosité du fluide d'amortissement.
